# EUROPEAN PATENT APPLICATION

(11) **EP 4 478 173 A1**
(43) Date of publication of application: **18.12.2024**
(21) Application number: 23193561.0
(22) Date of filing: 25.08.2023
(51) Int. Cl.: G06F 3/14

(54) **MODULAR DISPLAY APPARATUS**

(30) Priority: 16.06.2023 HK 32023074643
(71) Applicant: Kite Group Limited, Hong Kong (HK)
(72) Inventor: Hill, Michael Robert, Hong Kong (HK)
(74) Representative: J A Kemp LLP

(57) **Abstract**

A computer-implemented method of controlling a display module for a modular display system, includes sharing a module ID of the display module to one or more adjacent display modules, wherein the display module is connected to each adjacent display module with a short-range data connection, wherein each short-range data connection is associated with a connector ID and the module ID is sent through the short-range data connection to each adjacent display module; wirelessly transmitting the module ID of the display module to a controller module of the modular display system with one or more module IDs received from adjacent display modules and connector IDs of the corresponding short-range data connections; and displaying an image portion received wirelessly from the controller module on the display module.

## Description

### FIELD OF THE DISCLOSURE

The present disclosure relates to digital signage and, in particular, to large displays formed by connecting a plurality of adjacent display panels.

### BACKGROUND OF THE DISCLOSURE

Digital signage has advantages over printed signage as it can be updated in accordance with changing events (time, environment, status), and it can be re-used and repurposed. This is particularly useful in events, construction and retail environments.

Digital signage is often used outside where it must be resilient to weather and also visible in direct sunlight. LED based screens have become the standard for use in these outdoor situations. They are made of small tiles comprised of arrays of red, green and blue LEDs, these tiles are grouped together to form a large visible screen/display.

LED displays currently come in two forms, e.g. the LED displays are commonly seen at large concerts next to the stage, or those providing video walls on the sides of buildings. Both of these implementations present technical and practical challenges when used for non-permanent digital signage and small-scale displays.

In an event setting, such as concerts and exhibitions, these displays must be erected using specialist professional equipment that requires technical expertise. In more permanent settings, such as the outside of buildings, a mounting structure must be prefabricated using metal and the display must be connected using specialist technology, which again requires technical knowledge and equipment. In both case, to install the LED display a skilled technician is needed to custom program the system settings in order to match the right size, scaling and shape of the display.

It would be beneficial to provide an LED based displays which can be set up without specialist knowledge, for temporary displays such as outdoor digital signage in situations such as:
- Signage for events (concerts, exhibitions, festivals or sports)
- Retail/F&B outlets external or indoor signage
- Construction sites for warnings, information and marketing
- Celebrations and parties to create messaging or fun visuals
- Art works - digital artists using displays to create light sculptures

It is an object of the present disclosure to address or at least partially ameliorate some of the above problems of the current approaches.

### SUMMARY OF THE DISCLOSURE

Features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims.

In accordance with a first aspect of the present disclosure, there is provided a computer-implemented method of controlling a display module for a modular display system. The method includes sharing a module ID of the display module to one or more adjacent display modules, wherein the display module is connected to each adjacent display module with a short-range data connection, wherein each short-range data connection is associated with a connector ID and the module ID is sent through the short-range data connection to each adjacent display module; wirelessly transmitting the module ID of the display module to a controller module of the modular display system with one or more module IDs received from adjacent display modules and connector IDs of the corresponding short-range data connections; and displaying an image portion received wirelessly from the controller module on the display module.

In accordance with a second aspect of the present disclosure, there is provided a computer-readable medium configured to store instructions which, when executed by a processor, cause the processor to perform a method of controlling a display module for a modular display system. The method includes sharing a module ID of the display module to one or more adjacent display modules, wherein the display module is connected to each adjacent display module with a short-range data connection, wherein each short-range data connection is associated with a connector ID and the module ID is sent through the short-range data connection to each adjacent display module; wirelessly transmitting the module ID of the display module to a controller module of the modular display system with one or more module IDs received from adjacent display modules and connector IDs of the corresponding short-range data connections; and displaying an image portion received wirelessly from the controller module on the display module.

In accordance with a third aspect of the present disclosure, there is provided a display module for a modular display system, including a housing with 3 or more side walls, an upper face and a base; a light-emitting diode, LED, panel comprising a plurality of LEDs, the LED panel arranged on the upper face of the housing; a short-range data connection on each side wall, wherein each short-range data connection is associated with a connector ID; a wireless communication unit; and a processor.

The processor is configured to perform a method of controlling a display module for a modular display system. The method includes sharing a module ID of the display module to one or more adjacent display modules, wherein the display module is connected to each adjacent display module with a short-range data connection, wherein each short-range data connection is associated with a connector ID and the module ID is sent through the short-range data connection to each adjacent display module; wirelessly transmitting the module ID of the display module to a controller module of the modular display system with one or more module IDs received from adjacent display modules and connector IDs of the corresponding short-range data connections; and displaying an image portion received wirelessly from the controller module on the display module.

The method may include connecting to a Wi-Fi access point, receiving an IP address and setting the received IP address as the module ID.

The image portion may be a portion of a first frame in a moving image.

The method may include receiving and storing a second image portion of a second frame in the moving image, and displaying the second image portion after a predefined frame duration has elapsed.

The display module may include a memory configured to store the received image portion.

The number of side walls may be a tessellation number.

Each side wall may include a mechanical butterfly connector.

The short-range data connection may be a wired connector.

Each wired connector may be configured to transmit power between adjacent display modules.

In accordance with a fourth aspect of the present disclosure, there is provided a computer-implemented method of controlling a controller module for a modular display system. The method includes wirelessly receiving the module IDs of a plurality of display modules of the modular display system, each transmitted with one or more module IDs of adjacent display modules and connector IDs of respective short-range data connections between the display modules; determining an arrangement of the plurality of display modules; scaling and dividing an image to be displayed on the modular display system into a plurality of image portions; and wirelessly transmitting a respective image portion to each of the plurality of display modules.

In accordance with a fifth aspect of the present disclosure, there is provided a computer-readable medium configured to store instructions which, when executed by a processor, cause the processor to perform a method of controlling a controller module for a modular display system. The method includes wirelessly receiving the module IDs of a plurality of display modules of the modular display system, each transmitted with one or more module IDs of adjacent display modules and connector IDs of respective short-range data connections between the display modules; determining an arrangement of the plurality of display modules; scaling and dividing an image to be displayed on the modular display system into a plurality of image portions; and wirelessly transmitting a respective image portion to each of the plurality of display modules.

In accordance with a sixth aspect of the present disclosure, there is provided a controller module, wherein the controller module includes a wireless communication unit and a processor.

The processor is configured to perform a method of controlling a controller module for a modular display system. The method includes wirelessly receiving the module IDs of a plurality of display modules of the modular display system, each transmitted with one or more module IDs of adjacent display modules and connector IDs of respective short-range data connections between the display modules; determining an arrangement of the plurality of display modules; scaling and dividing an image to be displayed on the modular display system into a plurality of image portions; and wirelessly transmitting a respective image portion to each of the plurality of display modules.

The method may include configuring a Wi-Fi access point and proving an IP address to each connected display module.

The method may include configuring a webserver to generate and output a graphical user interface, GUI, which includes the determined arrangement of the plurality of display modules.

The method may include configuring a webserver to receive the image to be displayed on the modular display system.

In accordance with a seventh aspect of the present disclosure, there is provided a modular display system including a plurality of display modules and a controller module.

The controller module may be integrated with one of the display modules.

### BRIEF DESCRIPTION OF THE DRAWINGS

In order to describe the manner in which the above-recited and other advantages and features of the disclosure can be obtained, a more particular description of the principles briefly described above will be rendered by reference to specific embodiments thereof which are illustrated in the appended Figures. Understanding that these Figures depict only exemplary embodiments of the disclosure and are not therefore to be considered to be limiting of its scope, the principles herein are described and explained with additional specificity and detail through the use of the accompanying Figures.

Preferred embodiments of the present disclosure will be explained in further detail below by way of examples and with reference to the accompanying Figures, in which:-
Figure 1 shows a schematic diagram of a modular display system according to an embodiment.
Figure 2 shows a schematic diagram of a display module according to an embodiment.
Figure 3 shows a wireframe diagram of the display module.
Figures 4A and 4B show an implementation of the modular display system.
Figures 5A to 5D show an exemplary implementation of the modular display system.
Figures 6A to 6D show an exemplary implementation of the modular display system.
Figure 7 shows a flowchart of a method of controlling a display module for a modular display system.
Figure 8 shows a flowchart of a method of controlling a controller module for a modular display system.

### DETAILED DESCRIPTION OF THE PREFERRED EMBODIMENTS

Various embodiments of the disclosure are discussed in detail below. While specific implementations are discussed, it should be understood that this is done for illustration purposes only. A person skilled in the relevant art will recognize that other components and configurations may be used without departing from the scope of the disclosure.

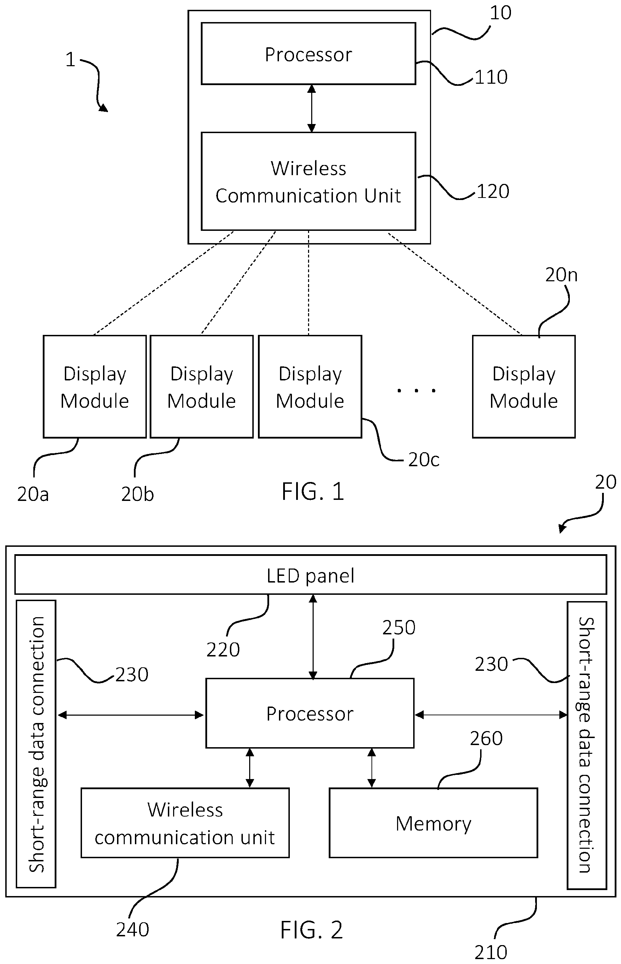

Referring to the drawings, there is shown in Figure 1 a schematic diagram of a modular display system 1 according to an embodiment. The modular display system 1 includes a controller module 10 and a plurality of display modules (20a - 20n).

The controller module 10 includes a processor 110 and a wireless communication unit 120. The processor 110 is configured to perform a method of controlling the controller module 10 for the modular display system 1. The processor 110 may be configured to execute the method by controlling the other components of the controller module 10.

The processor 110 is configured to wirelessly receive the module IDs of the plurality of display modules 20n. The processor 110 may be configured to control the wireless communication unit 120 to receive the module IDs. The wireless communication unit 120 may be configured to receive the plurality of module IDs from the display modules 20n. The wireless communication unit 120 may be configured to receive a transmission from each display module 20 including at least the module ID of that display module 20.

Each display module 20 may be connected to the wireless communication unit 120 through a wireless connection. For example, the wireless communication unit 120 may be configured to communicate using Wi-Fi, Bluetooth, Zigbee or any other suitable wireless communication protocol. The wireless communication unit 120 of the controller module 10 and the display modules 20n may communicate wirelessly using a private network or mesh network which is not accessible by external devices.

The module ID of each display unit may be globally unique. The module ID of each display module 20 may be assigned by the controller module 10 e.g. via the wireless communication unit 120 of the controller module 10. Alternatively, the module ID of each display apparatus may be an existing identifier e.g. an IP address, MAC address, Bluetooth public address or any other suitable identifier.

The wireless communication module 120 may be configured as a Wi-Fi access point and may provide an IP address to each connected display module 20. The wireless communication module 120 may be configured as a Dynamic Host Configuration Protocol (DHCP) server to allocate IP addresses to each connected display module 20. Alternatively, the wireless communication module 120 may be configured as a bridge to an external network with an external DHCP server. The IP address assigned to each display module 20 may be utilised as the module ID of that display module 20. The wireless communication module 120 may be configured to provide wireless access and assign module IDs in an equivalent way using any alternative wireless protocol such as Bluetooth, Zigbee etc.

Each module ID is transmitted with one or more module IDs of adjacent display modules 20n. Each display module 20 may transmit the module IDs of any adjacent display modules 20n connected on all sides of the display module 20.

Alternatively, each display module 20 may transmit the module IDs of any adjacent display modules 20n connected on half of the sides of the display module 20. For example, each square module may transmit the module IDs of any adjacent display modules 20n connected to the top and left sides of the display module 20. In this way, each connection is managed by only one of the two adjacent modules, reducing the transmission of redundant information.

Each module ID is transmitted with connector IDs of the respective short-range data connections between that display module 20 and the adjacent display modules 20n. Connector IDs may be unique within the display module, e.g. numbered 1-4 or labelled as A-D, North/East/South/West or any suitable label, or connector IDs may be globally unique e.g. a longer serial number which is not repeated in another other display module 20. Additional operational information may be transmitted in either direction between the display modules 20n and the controller module 10, e.g., a group ID identifying a group of the display modules 20n, a panel type of one or more of the display modules 20n, status queries etc.

The processor 110 is configured to determine an arrangement of the plurality of display modules 20n. The processor 110 may be configured to execute a discovery algorithm starting with a root module e.g. the module with the highest/lowest module ID or a randomly selected starting module. The algorithm may proceed from the root module e.g. identifying and positioning all connected display modules 20n before proceeding to the module with the next module ID in sequence and repeating the process. In some examples, where each module may transmits only half of the module IDs of adjacent display modules 20n the algorithm may proceed by, e.g., checking all modules connected to the left-side connector, then systematically checking the topside connectors of each discovered module, then repeating. Alternatively, the processor 110 may execute any other suitable discovery algorithm. The processor 110 may determine the arrangement of display modules 20n based on at least one received panel type.

The processor 110 is configured to scale and divide an image to be displayed on the modular display system 1 into a plurality of image portions. For example, the processor 110 may identify the largest width and the largest height of the discovered arrangement, and scale the image to an aspect ratio based on these dimensions. The width and height may be determined in units based on the size of a display module 20 e.g. 2 display modules high x 3 display modules wide. The processor 110 may be configured to stretch the image, scale and crop the image, or add side/top bars to fill the space. Alternatively, these options may be presented to a user for selection. The processor 110 may be configured to divide the image into a grid based on the largest width and the largest height. In the example above the image may be divided into a 2x3 grid.

Each grid section may define an image portion to be sent to a display module 20. If the grid section corresponds to an empty space in the arrangement the image portion may be discarded.

The processor 110 may be configured to configure a webserver to generate and output a graphical user interface, GUI, e.g. as a web application. The GUI may include the determined arrangement of the plurality of display modules 20n. The web application may be accessible to a user using a browser e.g. on a computer or smartphone. Alternatively, or in addition, the webserver may be linked to a dedicated application on one or more platforms. If the controller module 10 and display modules 20n are connected wirelessly using a private or mesh network, the controller module 10 may be connected separately to an external device for hosting the webserver. The controller module 10 may be connected externally via wireless connection or a wired Ethernet connection. For example, the processes of layout discovery and image scaling/dividing may be carried out locally on the controller module 10, while the generation of the GUI is carried out by the external device.

The webserver may be configured to generate and output a GUI to receive the image to be displayed. The image to be displayed may be uploaded to the webserver by the user e.g. via the GUI. The image format may be, e.g., bmp, png, jpeg, tiff, or any suitable image format. The image may be a gif, animated PNG or other animated image format. The webserver may receive a plurality of images to be displayed. The plurality of images may be displayed in sequence or at random according to a user selection.

A network time protocol (NTP) server may be configured in the wireless communication unit 120 of the controller module 10, such that the display modules 20n can synchronise the display of an animated image or multiple images.

The image to be displayed may be an image frame of a video. The webserver may be configured to receive a video file in any format e.g. mp4, mov, avi, webm, or any other suitable form. The webserver may be configured to link to a video streaming source using e.g. network device interface (NDI), Real Time Streaming Protocol (RTSP), HTTP Live Streaming protocol (HLS) or any other suitable video streaming protocol.

The GUI may be configured to display a status of one or more of the display modules 20n e.g. power, battery, connection etc. The GUI may allow the user to update one or more parameters of the display modules 20n e.g. brightness, framerate etc.

The processor 110 is configured to wirelessly transmit a respective image portion to each of the plurality of display modules 20n. The processor 110 may be configured to control the wireless communication unit 120 to transmit the image portions. The wireless communication unit 120 may be configured to transmit each image portion to one of the plurality of display modules 20n. The wireless communication unit 120 may be configured to transmit a plurality of image frame portions to each display module 20.

The controller module 10 may be integrated with one of the display modules 20n. In some implementations, each of the display modules 20n may be capable of operating as the controller module 10. The controller module 10 may be determined between the plurality of display modules 20n, e.g. the first display module to be powered on.

The controller module 10 may be configured to serve several independent groups of display modules 20n. Each group may be identified by a group ID. The GUI may be configured to display the layout for each group of display modules 20n and allow the upload of a different image to be displayed on each group of display modules 20n.

Figure 2 shows a schematic diagram of a display module 20 for a modular display system 1. The display module 20 includes a housing 210; a light-emitting diode, LED, panel 220; a short-range data connection 230 on each side wall; a wireless communication unit 240; and a processor 250.

The housing 210 includes 3 or more side walls, an upper face and a base. The number of side walls may be a tessellation number. For example, the number of side walls may be 3, 4 or 6. Each of the side walls may have the same length. In this way, the housing 210 modules may easily be connected adjacently to form a cohesive two-dimensional display surface. Other shapes of display module are contemplated, and display modules with different shapes and/or sides may be provided and interconnected in more complex tiling arrangements.

The LED panel 220 includes a plurality of LEDs. The LED panel 220 is arranged on the upper face of the housing 210. The LED resolution may be 32x32 or 64x64, based on commonly available OEM panels, or may be any other suitable resolution. The display module 20 may be implemented with any other suitable display technology e.g. LCD, OLED, e-paper etc.

Each short-range data connection 230 is associated with a connector ID. The short-range data connection 230 may include a wired connector. Each wired connector may be configured to transmit power between adjacent display modules 20n. Alternatively or in addition, the short-range data connection 230 may include a short-range wireless connection such as near-field communication (NFC), radio-frequency identification (RFID), Bluetooth etc.

The display module 20 may include a memory 260, as described in more detail below.

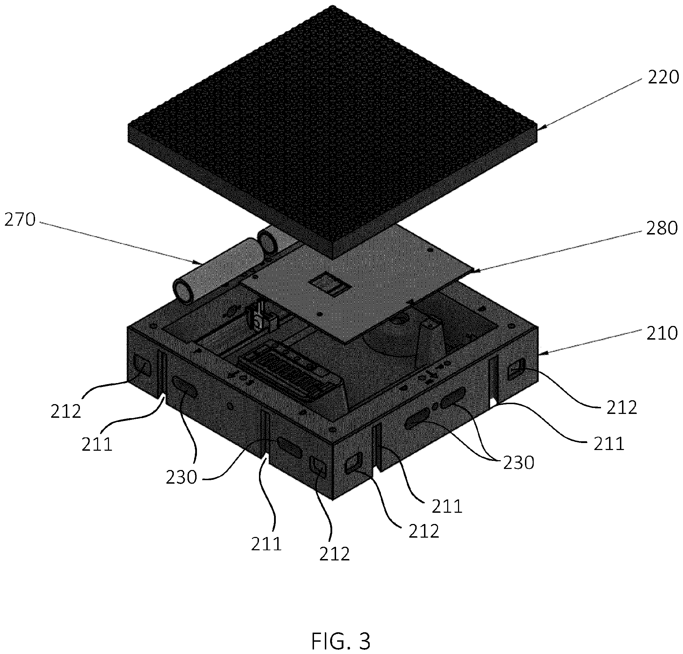

Figure 3 shows a wireframe diagram of the display module 20. The display module 20 may include the housing 210, the LED panel 220, a power source 270 and a PCB 280.

The housing 210 of the display module 20 may be formed as a rectangular box structure. The housing 210 may include four side walls, a base and an upper surface for mounting the LED panel 220. An internal cavity of the housing 210 may house the other components of the display module 20. The housing 210 may form a sealed box when the LED panel 220 is fixed in place, which may be substantially waterproof. Each side wall includes a short-range data connection 230, mechanical connectors 211 and a limiting element 212.

As shown, the display module 20 may include wired connectors on each side wall. Each wired connector may be a spring loaded two-pin connector. The wired connectors may be asymmetrical plug and socket paired connectors, arranged on opposite sides of the housing 210 e.g. such that a plug connector on the left side of the housing 210 meets a socket connector on the right side of an adjacent housing 210. Alternatively, the wired connectors may be symmetrical.

At least one of the wired connectors on each side may be the short-range data connection 230. At least one of the wired connectors on each side may be a power connector. In some examples, power and data may be transmitted through a single connector. In some examples, a wired power connection may be present while data is transmitted wirelessly through a short-range wireless connection. In some examples, power and data may be transferred wirelessly.

The mechanical connectors 211 may be configured to connect adjacent display modules 20n, as will be explained in more detail below. The limiting elements 212 may be configured to limit or restrict movement between adjacent display modules 20n, as will be explained in more detail below.

The power source 270 may include a cable power connection. The cable power connection may receive external power. The received power may be alternative current or direct current power. The display module 20 may include a converter, rectifier and/or transformer to reduce the supplied voltage. The cable power connection may supply power to a plurality of adjacent display modules 20n via the wired power connections. Alternatively, or in addition, the power source 270 may include a rechargeable battery system, for autonomous operation and/or in case of power failure. The cable power connection may charge the battery when connected to the display module 20 or a connected display module 20.

The PCB 280 may be configured for mounting the processor 250 and the wireless communication unit 240. In some examples, the PCB 280 may further include components for the configuration of the controller module 10. The PCB 280 may include one or more hardware buttons e.g. for configuration / power on-off of the display module 20. The PCB 280 may include one or more LEDs showing status such as battery charge state, side wall connection status, Wi-Fi connection status etc.

The processor 250 is configured to perform a method of controlling a display module 20 for a modular display system 1. The processor 250 may be configured to execute the method by controlling the other components of the display module 20.

The processor 250 is configured to share a module ID of the display module 20 to one or more adjacent display modules 20n. The module ID may be assigned by the controller module 10 of the modular display system 1.

The wireless communication unit 240 may be configured to wirelessly connect to the controller module 10. The wireless communication unit 240 may be configured to connect to a Wi-Fi access point set up by the controller module 10. The processor 250 may control the wireless communication unit 240 to connect to the Wi-Fi access point. Alternatively, the wireless connection to the controller module 10 may use any other suitable protocol such as Bluetooth, Zigbee etc.

The processor 250 may receive a module ID assigned by the controller module 10 through the wireless communication unit. The processor 250 may receive an IP address set by the Wi-FI access point and set the received IP address as the module ID.

The display module 20 is connected to each adjacent display module 20 with the short-range data connection 230 on the closest side wall. The processor 250 is configured to share the module ID through the short-range data connection 230 to each adjacent display module 20. Each short-range data connection 230 may be configured to share the module ID by transmitting the module ID to the corresponding short-range data connection 230 of the adjacent display module 20. Alternatively, each short-range data connection 230 may be configured to share the module ID by broadcasting the module ID or making the module ID available for detection by the corresponding short-range data connection 230 of the adjacent display module 20. Each short-range data connection 230 may be configured to listen for a module ID sent or broadcast by an adjacent display module 20.

The wireless communication unit 240 is configured to wirelessly transmit the module ID of the display module 20 to the controller module 10 of the modular display system 1. The processor 250 may be configured to control the wireless communication unit 240 to transmit the module ID. The module ID of the display module 20 is transmitted with one or more module IDs received from adjacent display modules 20n. The module IDs of adjacent display modules 20n are transmitted with connector IDs of the corresponding short-range data connections 230. Additional operational information may be transmitted in either direction between the display modules 20n and the controller module 10, e.g., a group ID identifying a group of the display modules 20n, a panel type indicating a size and/or shape of the display modules 20n, status queries etc.

The processor 250 is configured to display an image portion received wirelessly from the controller module 10 on the display module 20. The wireless communication unit 240 may be configured to receive the image portion wirelessly from the controller module 10.

The processor 250 may be configured to control the LED panel 220 to display the image portion. The LED panel 220 may be configured to display the image portion received from the controller module 10.

In this way, the configuration of the display module 20 allows the automatic detection of the layout of the display modules 20n in the modular display system 1. As part of the modular display system 1, the display modules 20n can provide the layout without individual addressing of the display modules 20n in the system.

The plurality of display modules 20n can be easily connected together in any arrangement and layout will be self-discovered without complex addressing of individual modules. After use, the modules can be easily disassembled and removed.

The configuration of the display module 20 allows the output of a contiguous image on the display modules 20n of the modular display system 1. The system enables automatic image scaling and division based on the discovered layout. The system enables convenient GUI options, whereby the discovered layout can be conveniently presented to user. An image uploaded by the user can be directed into scaling and division e.g. to show the user how the image will look on the discovered layout.

The display module 20 may include a memory configured to store the received image portion. The image portion may be stored and displayed after a power cycle. The memory may be configured to store a plurality of image frame portions to be displayed in sequence or at random.

The image portion may be a portion of a first frame in a moving image. The processor 250 may be configured to receive a second image portion of a second frame in the video stream and display the second image portion after a predefined frame duration has elapsed. The processor 250 may be configured to store the received second image portion in the memory until the predefined frame duration of the first frame has elapsed. Subsequent frames in a video stream may be received and displayed in the same way.

The image frame portions in the moving image may be part of a video stream or an animated image. The processor 250 may be configured to display the image frame portions stored in the memory at a predefined frame rate, specifying the predefined frame duration. The processor 250 may be configured to display the next image frame portion stored in the memory in response to a signal from a connected NTP server. Alternatively, one or more of the received image frames portion may be received along with the predefined frame duration for that image frame portion.

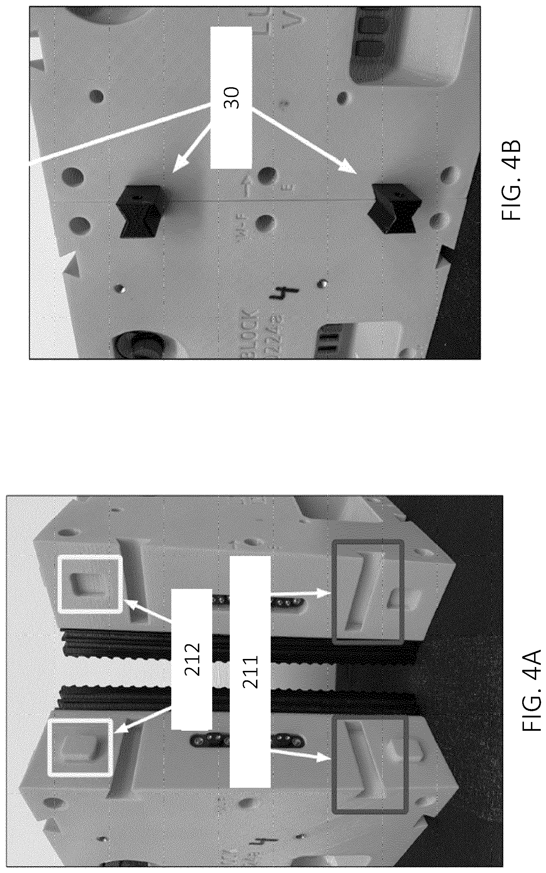

Figures 4A shows an implementation of the module display system. Each of the side walls may include at least one mechanical connector, which may be referred to as a "butterfly" connector. Each mechanical connector may include a dovetailed slot extending from the rear surface through at least a portion of the depth of the side wall. The mechanical connectors 211 may be arranged on each side wall such that the slot for adjacent display modules 20n is aligned.

Each of the side walls may include at least one limiting element 212 to prevent sliding motion of display modules 20n when adjacent, e.g. a protrusion from one side received in a cavity on the other side. One or more protrusions or cavities may be formed on opposite sides of a four-sided housing 210 such that e.g. protrusions on the left-side of the display module 20 may be received by cavities on the right-side of an adjacent display module 20. Each side may have an arrangement of protrusions and cavities, where they are aligned in a similar fashion.

Figure 4B shows the adjacent display modules 20n in connection. A butterfly peg 30 may be provided which simultaneously slides into both slots when they are adjacent. In this way, the dovetail shape of the slots can prevent the display modules 20n from being pulled apart.

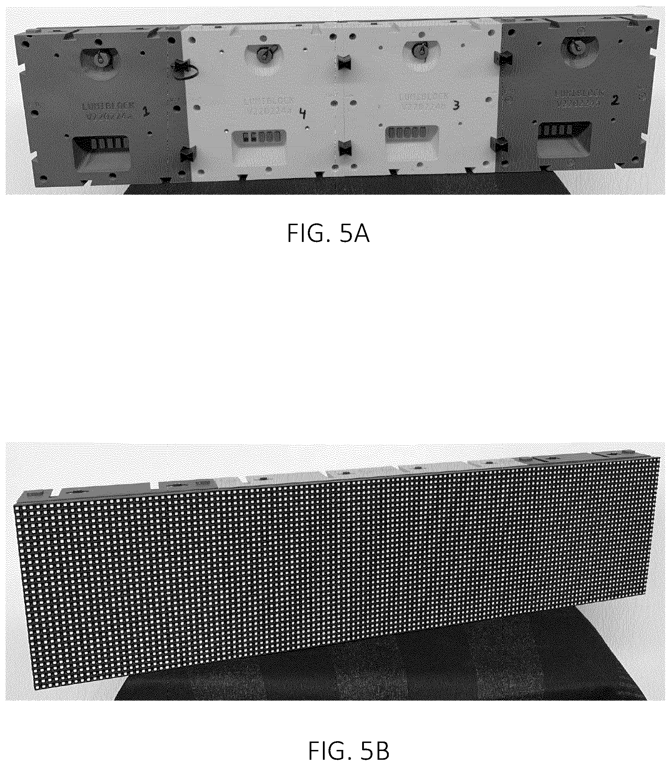

Figures 5A shows an exemplary implementation of the modular display system. As shown, four display modules may be placed in a linear arrangement and adjacent display modules may be connected using butterfly pegs. As shown, the modular display system may be operated with none of the display modules connected to an external source, using the internal batteries of each display module.

Figure 5B shows the front of the assembled display modules, where the contiguous LED panels may form a common display surface.

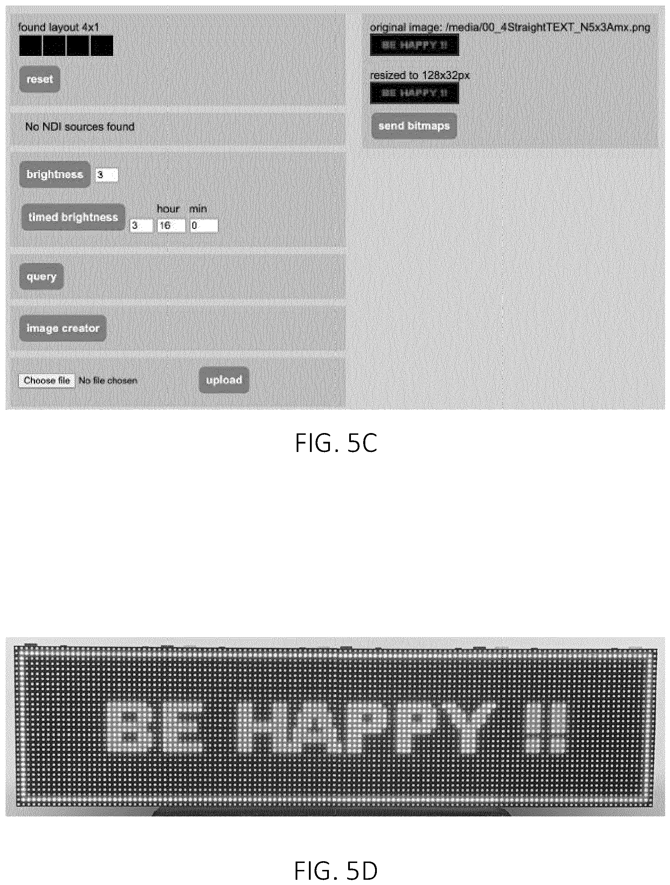

Figure 5C shows an exemplary implementation of the GUI. As shown, the GUI may include an area to show the discovered layout, in this case a 4x1 arrangement of display modules.

The GUI may include an area to select and upload an image, animated image, or video file to be displayed. The GUI may include an area to show an uploaded image to be displayed, and a scaled and/or divided version of the image to illustrate how it would appear when displayed by the modular display system. The GUI may include a selection element to send the image portions to the display modules.

The GUI may include alternative image sources. For example, the GUI may include an area to display any NDI video sources. The GUI may include an image creator e.g. a simple editor to generate text based images with static or scrolling text in user-selected colours. This option may be useful for quick setup or emergency communications.

The GUI may include configuration options for the modular display system. For example, the GUI may include an area to adjust an absolute brightness or timed brightness of the display modules. The timed brightness may defined based on a current battery level and expected battery life of the display modules, where the brightness may be automatically set such that the battery will last for the required length of time.

Figure 5D shows the front of the assembled display panels, displaying the image uploaded using the GUI.

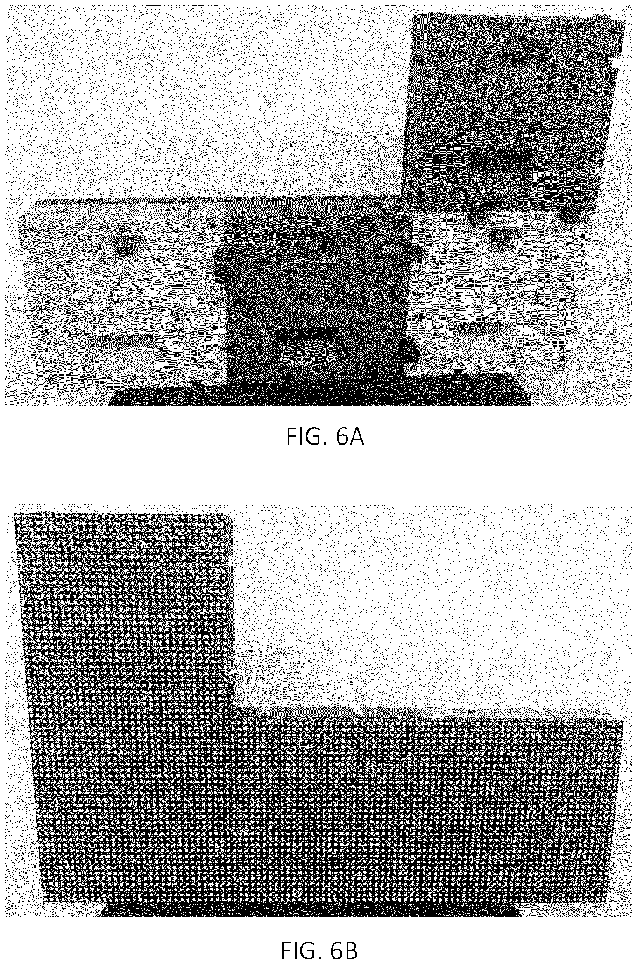

Figures 6A shows a further exemplary implementation of the modular display system. As shown, four display modules may be placed in an L-shaped arrangement and adjacent display modules may be connected using butterfly pegs.

Figure 6B shows the front of the assembled display modules, where the contiguous LED panels may form a common display surface.

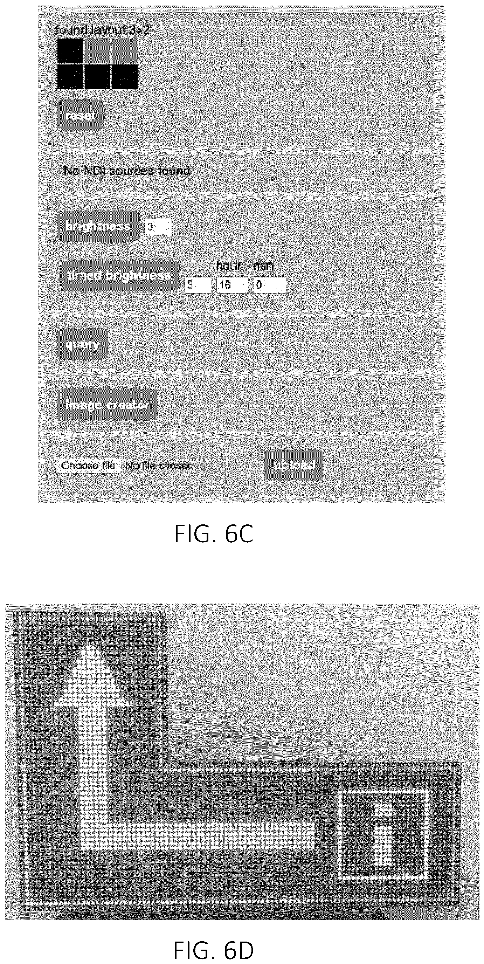

Figure 6C shows an exemplary implementation of the GUI. The area for showing the discovered layout may show the 3x2 L-shaped arrangement of the display modules. In some examples, more complex arrangements of display modules may be displayed e.g. with different panel sizes and/or shapes. The GUI may include an area to select and upload an image to be displayed. In this case, an uploaded image may be scaled to 3x2 and divided into a grid of 6 image portions. Four of the image portions may be transmitted to the display portions forming the L-shape, and the remaining two image portions may be discarded.

Figure 6D shows the front of the assembled display panels, displaying an image uploaded using the GUI.

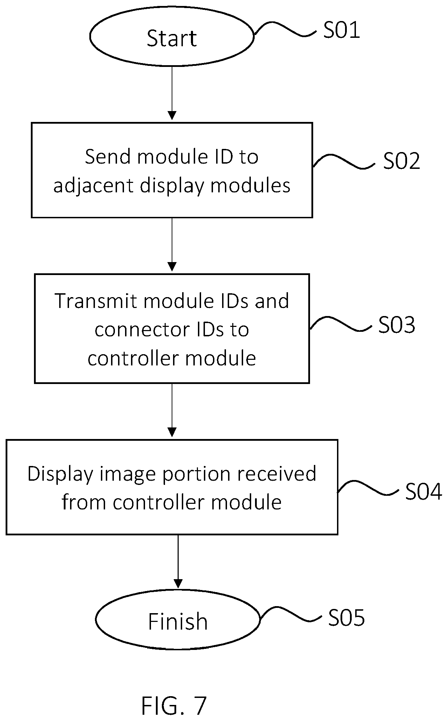

Figure 7 shows a flowchart of a method of controlling a display module for a modular display system. The method starts at step S01.

At step S02, a module ID of the display module is sent to one or more adjacent display modules. The display module is connected to each adjacent display module with a short-range data connection and each short-range data connection is associated with a connector ID. The module ID is sent through the short-range data connection to each adjacent display module.

At step S03, the module ID of the display module is wirelessly transmitted to a controller module of the modular display system with one or more module IDs received from adjacent display modules and connector IDs of the corresponding short-range data connections.

At step S04, an image portion received wirelessly from the controller module is displayed on the display module.

The method finishes at step S05.

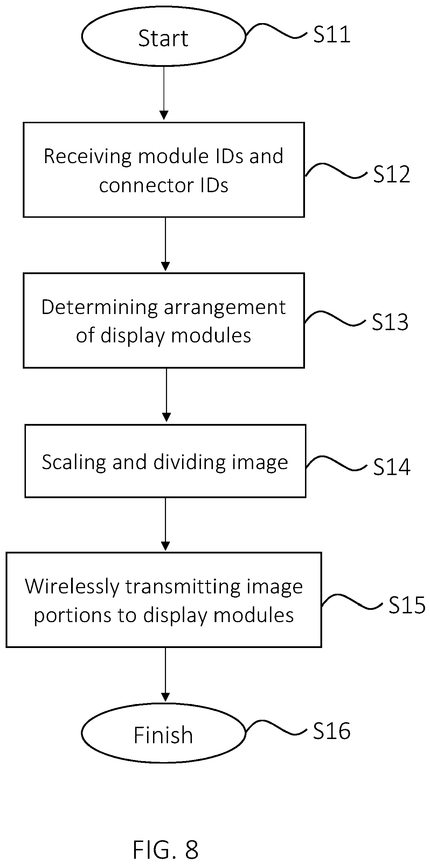

Figure 8 shows a flowchart of a method of controlling a controller module for a modular display system. The method begins at step 511.

At step S12, the module ID of a plurality of display modules of the modular display system are received wirelessly. Each module ID is transmitted with one or more module IDs of adjacent display modules and connector IDs of respective short-range data connections between the display modules.

At step S13, an arrangement of the plurality of display modules is determined.

At step S14, an image to be displayed on the modular display system is scaled and divided into a plurality of image portions.

At step S15, a respective image portion is wirelessly transmitted to each of the plurality of display modules.

The method finishes at step S16.

The above embodiments are described by way of example only. Many variations are possible without departing from the scope of the disclosure as defined in the appended claims.

For clarity of explanation, in some instances the present technology may be presented as including individual functional blocks including functional blocks comprising devices, device components, steps or routines in a method embodied in software, or combinations of hardware and software.

Methods according to the above-described examples can be implemented using computerexecutable instructions that are stored or otherwise available from computer readable media. Such instructions can comprise, for example, instructions and data which cause or otherwise configure a general purpose computer, special purpose computer, or special purpose processing device to perform a certain function or group of functions. Portions of computer resources used can be accessible over a network. The computer executable instructions may be, for example, binaries, intermediate format instructions such as assembly language, firmware, or source code. Examples of computer-readable media that may be used to store instructions, information used, and/or information created during methods according to described examples include magnetic or optical disks, flash memory, Universal Serial Bus (USB) devices provided with non-volatile memory, networked storage devices, and so on.

Devices implementing methods according to these disclosures can comprise hardware, firmware and/or software, and can take any of a variety of form factors. Typical examples of such form factors include laptops, smart phones, small form factor personal computers, personal digital assistants, and so on. Functionality described herein also can be embodied in peripherals or addin cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

## Claims

1. A computer-implemented method of controlling a display module for a modular display system, the method comprising:
sharing a module ID of the display module to one or more adjacent display modules, wherein the display module is connected to each adjacent display module with a short-range data connection, wherein each short-range data connection is associated with a connector ID and the module ID is sent through the short-range data connection to each adjacent display module;
wirelessly transmitting the module ID of the display module to a controller module of the modular display system with one or more module IDs received from adjacent display modules and connector IDs of the corresponding short-range data connections; and
displaying an image portion received wirelessly from the controller module on the display module.

2. The computer-implemented method of claim 1, further comprising, connecting to a Wi-Fi access point, receiving an IP address and setting the received IP address as the module ID.

3. The computer-implemented method of claim 1 or claim 2, wherein the image portion is a portion of a first frame in a moving image, and the method further comprises:
receiving and storing a second image portion of a second frame in the video stream; and
displaying the second image portion after a predefined frame duration has elapsed.

4. A computer-implemented method of controlling a controller module for a modular display system, the method comprising:
wirelessly receiving the modules ID of a plurality of display modules of the modular display system, each transmitted with one or more module IDs of adjacent display modules and connector IDs of respective short-range data connections between the display modules;
determining an arrangement of the plurality of display modules;
scaling and dividing an image to be displayed on the modular display system into a plurality of image portions; and
wirelessly transmitting a respective image portion to each of the plurality of display modules.

5. The computer-implemented method of claim 4, further comprising:
configuring a Wi-Fi access point and proving an IP address to each connected display module.

6. The computer-implemented method of claim 4 or claim 5, further comprising:
configuring a webserver to generate and output a graphical user interface, GUI, which includes the determined arrangement of the plurality of display modules, and to receive the image to be displayed on the modular display system.

7. A computer-readable medium configured to store instructions which, when executed by a processor, cause the processor to perform the method of any preceding claim.

8. A display module for a modular display system; comprising
a housing with 3 or more side walls, an upper face and a base;
a light-emitting diode, LED, panel comprising a plurality of LEDs, the LED panel arranged on the upper face of the housing;
a short-range data connection on each side wall, wherein each short-range data connection is associated with a connector ID;
a wireless communication unit; and
a processor configured to perform the method of any one of claims 1 to 3.

9. The display module of claim 8, wherein the number of side walls is a tessellation number.

10. The display module of claim 8 or claim 9, further comprising a memory configured to store the received image portion.

11. The display module of any one of claims 8 to 10, wherein each side wall includes a mechanical butterfly connector.

12. The display module of any one of claims 8 to 11, wherein the short-range data connection comprises a wired connector.

13. The display module of claim 12, wherein each wired connector is further configured to transmit power between adjacent display modules.

14. A modular display system comprising a plurality of the display modules according to any one of claims 8 to 13, and a controller module, wherein the controller module comprises:
a wireless communication unit; and
a processor configured to perform the method of any one of claims 4 to 6.

15. The modular display system of claim 14, wherein the controller module is integrated with one of the display modules.
